# EUROPÄISCHE PATENTSCHRIFT

(11) **EP 1 278 027 B1**
(45) Veröffentlichungstag und Bekanntmachung des Hinweises auf die Patenterteilung: **01.03.2006**
(21) Anmeldenummer: 02013843.4
(22) Anmeldetag: 22.06.2002
(51) Int. Cl.: F25B 15/10, F25B 37/00

(54) **Diffusionsabsorptionsanlage**
Diffusion absorption plant
Installation d'absorption à diffusion

(30) Priorität: 18.07.2001 DE 10135017
(43) Veröffentlichungstag der Anmeldung: 22.01.2003
(73) Patentinhaber: BBT Thermotechnik GmbH, 35576 Wetzlar (DE)
(72) Erfinder: Schulte, Uwe, 35037 Marburg (DE); Korinth, Christoph, 57555 Mudersbach (DE); Vloon, Paulus Jakobus, 7422 Deventer (NL); Lammert Wierenga, Hendrick Jacob, 8196 KC Welsum (NL)

(56) Entgegenhaltungen:
- DE-U- 7 434 735
- GB-A- 292 199
- GB-A- 354 569
- US-A- 2 185 001

## Beschreibung

Die Erfindung betrifft eine Diffusionsabsorptionsanlage nach dem Oberbegriff des Patentanspruches 1.

Diffusionsabsorptionsanlagen sind als Kleinkälteanlagen zur Verwendung in Haushaltskühlschränken seit langem bekannt. Sie können mit einer entsprechenden konstruktiven Gestaltung auch als Wärmepumpen zu Heiz- oder Kühlzwecken eingesetzt werden. In diesen Anlagen wird das Kältemittel Ammoniak (NH₃) und Wasser als Stoffpaar eingesetzt. Dabei stellt das Wasser als Lösungsmittel den absorbierenden Stoff dar, wobei als druckausgleichendes Trägergas in der Regel Wasserstoff oder Helium verwendet wird. Als Arbeitsmedium im Kreisprozess setzt sich das Ammoniak-/Wasser-Gemisch bei Wärmezufuhr durch Temperatur- und Konzentrationsunterschiede in Bewegung.

Die Wärmezufuhr erfolgt in einem Kocher. Durch Sieden werden Gasblasen aus der NH₃₋reichen Lösung ausgetrieben. Der Wasseranteil in diesem Gasstrom wird im Rektifikator abgeschieden bzw. zurückgeführt, so dass fast reiner NH₃-Dampf zum Kondensator strömt. Dabei muss die Gasblasenpumpe so ausgebildet sein, dass sie die Flüssigkeit auf eine erhebliche Höhe pumpt, um die nötige Antriebskraft zu erzeugen. Der hochreine Ammoniakdampf kondensiert und gibt dabei die Kondensationswärme an das Heizungswasser ab. Anschließend strömt das flüssige Ammoniak abwärts in den Verdampfer. In der Helium-/Ammoniak-Atmosphäre verdampft das Ammoniak unter Aufnahme von Umgebungsenergie. Danach gelangt das Gasgemisch durch einen Gas-/Gas-Wärmetauscher und strömt zum Absorber, wo das gasförmige Ammoniak von der NH₃-armen Ammoniak-/Wasser-Lösung absorbiert wird und die Absorptionswärme an das Heizungswasser abgibt, bevor der geräuschfreie Prozess wieder neu beginnt.

Sowohl die EP 0 413 791 B1 als auch die EP 0 419 606 B1 zeigen eine Diffusionsabsorptionsanlage mit den einzelnen Aggregaten. Diese sind jeweils als separate Bauteile ausgeführt und über Leitungen miteinander verbunden. Weil der Arbeitsdruck bei derartigen Anlagen mehr als 20 bar beträgt, müssen alle Aggregate und Leitungen entsprechend druckfest gestaltet sein. Daher ergibt sich bei diesem Aufbau eine große Anzahl von Schweißnähten, die sehr hochwertig ausgeführt sein müssen. Insgesamt entsteht für die vielen einzelnen Druckbehälter und Leitungen ein erheblicher Material-, Fertigungs- und Prüfaufwand.

DE-U-743 4735 beschreibt einen Absorber mit einem Gas-/Gas -Wärmetauscher, wobei der Gas-/Gas- Wärmetauscher über dem Absorber angeordnet ist.

Der Erfindung liegt die Aufgabe zugrunde, den Aufbau und Funktion einer Diffusionsabsorptionsanlage zu optimieren.

Erfindungsgemäß wird dies mit den Merkmalen des Patentanspruches 1 gelöst. Vorteilhafte Weiterbildungen sind den Unteransprüchen zu entnehmen.

Die Diffusionsabsorptionsanlage ist dadurch gekennzeichnet, dass der Gas-/Gas-Wärmetauscher innerhalb des Absorbers, in dessen Zentrum, angeordnet ist. Er befindet sich vorzugsweise unterhalb des Verdampfers und auf dessen Mittelachse, die gleichzeitig auch die Mittelachse des Absorbers bildet. Absorber, Verdampfer und Gas-/Gas-Wärmetauscher sind dabei in einem gemeinsamen äußeren Druckbehälter eingeschlossen.

Über dem Gas-/Gas-Wärmetauscher ist auf dessen Abströmseite ein Kanal angeordnet. Dieser durchdringt das Zentrum des Verdampfers und mündet in dessen oberen Bereich ein. Hier wird die den Kanal verlassende gasförmige Phase im anströmseitigen Bereich des Verdampfers gleichmäßig nach außen umgelenkt, damit die feinen Wärmetauscher-kanäle, bzw. die Wandflächen gleichmäßig angeströmt werden.

Nach dem Verlassen des Verdampfers an dessen Unterseite wird das vorher entstandene Helium-/Ammoniak-Gemisch nach innen umgelenkt und tritt in den oberen Bereich des Gas-/Gas-Wärmetauschers ein. Dort strömt Helium-/Ammoniak-Gemisch an den Wärmetauscherflächen im Gegenstrom zum aufsteigenden Medium im Zentrum der Anordnung.

Vorzugsweise ist der Gas-/Gas-Wärmetauscher als vertikal ausgerichteter Rohrbündel-Wärmetauscher ausgeführt. Dabei befindet sich innerhalb der Rohre des Rohrbündel-Wärmetauschers das aufsteigende Helium. Auf der Außenseite werden die Rohre vom Helium-/Ammoniak-Gemisch umströmt, das den Verdampfer verlässt. In einer weiteren Ausführungsvariante kann innerhalb der Rohre des Rohrbündel-Wärmetauschers das den Verdampfer verlassende Medium und außerhalb der Rohre das aufsteigende Helium strömen.

Am unteren Ende des Gas-/Gas-Wärmetauschers wird das Helium-/Ammoniak-Gemisch nach außen umgelenkt und tritt von unten her in den Absorber ein. Dort wird das gasförmige Ammoniak von der NH₃-armen Ammoniak-/Wasser-Lösung absorbiert. Die Absorptionswärme geht an das Heizungswasser, welches innerhalb der Wärmetauscher-Kanäle des Absorbers fließt, über. An der Abströmseite des Absorbers wird das Helium nach unten in einen Ringspalt umgelenkt. Dieser befindet sich zwischen der Innenseite des Absorbers und der Außenseite des Gas-/Gas-Wärmetauschers, und bildet die Verbindung zur Einströmseite, d. h. den unteren Rohrenden, des Gas-/Gas-Wärmetauschers.

Mit dem erfindungsgemäßen Aufbau der Diffusionsabsorptionsanlage wird der Material-, Fertigungs- und Prüfaufwand deutlich reduziert. Insbesondere sind nur noch wenige hochwertig auszuführende, druckbelastete Schweißnähte erforderlich, die beispielsweise zum Fügen der Außenwand eines Behälters dienen. Auch der Aufwand für die Verrohrung sinkt, weil nur noch die Rohrleitungen zum Verbinden der einzelnen Behälter druckbelastet sind. Im Behälterinneren können Baugruppen mit einfacheren Verbindungstechniken angeschlossen werden. Je nach Anwendungsfall erfüllen um Beispiel Press- oder Steckverbindungen ihren Zweck, da sogar geringe Leckströme, wie zum Beispiel zwischen der NH₃₋armen und -reichen Lösung, die Anlagenfunktion nicht beeinträchtigen.

Dies begünstigt eine Kosten sparende, maschinelle Großserienproduktion mit fertigungsgerechtem Aufbau und Montagezeiterspamis.

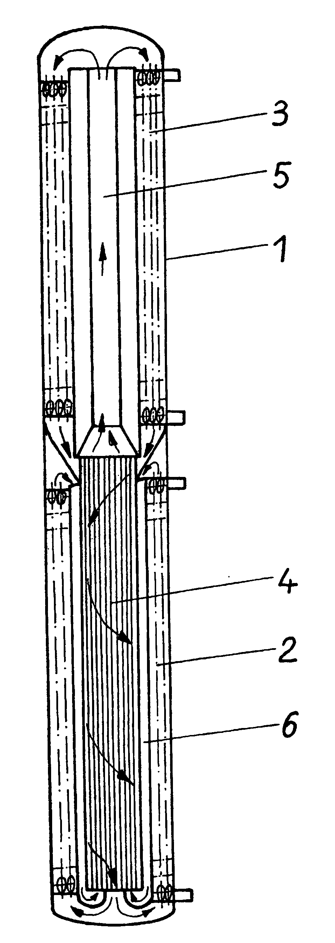

Die Zeichnung stellt ein Ausführungsbeispiel der Erfindung dar und zeigt in einer einzigen Figur einen vertikalen Schnitt durch einen Druckbehälter mit Absorber, Verdampfer und Gas-/Gas-Wärmetauscher als Bauteil einer Diffusionsabsorptionsanlage.

In einem Druckbehälter 1 sind ein Absorber 2, ein Verdampfer 3 und ein Gas-/Gas-Wärmetauscher 4 zusammengefasst. Dabei bildet der Druckbehälter 1 gleichzeitig die Außenwand von Absorber 2 und Verdampfer 3. Im Zentrum des Absorbers 2 befindet sich der Gas-/Gas-Wärmetauscher 4. Dieser besitzt an seinem abströmseitigen Ende einen Kanal 5, welcher das Zentrum des Verdampfers 3 durchdringt und in dessen oberen Bereich mündet. Ein Ringspalt 6 verbindet die obere Abströmseite des Absorbers 2 mit der unteren Einströmseite des Gas-/Gas-Wärmetauschers 4 und ist zwischen der Innenwand des Absorbers 2 und der Außenwand des Gas-/Gas-Wärmetauschers 4 angeordnet.

## Patentansprüche

1. Diffusionsabsorptionsanlage mit einem Kälte- bzw. Lösungsmittelkreislauf, einem Kocher, einem Absorber (2), einem Rektifikator, einem Verdampfer (3), einem Gas-/Gas-Wärmetauscher (4), einem Kondensator sowie einem Reservoir für das Kälte- bzw. Lösungsmittel,
**dadurch gekennzeichnet, dass** der Gas-/Gas-Wärmetauscher (4) innerhalb des Absorbers (2) angeordnet ist.

2. Diffusionsabsorptionsanlage nach Anspruch 1,
**dadurch gekennzeichnet, dass** der Gas-/Gas-Wärmetauscher (4) im Zentrum des Absorbers (2), vorzugsweise unterhalb des Verdampfers (3) und auf dessen Mittelachse, angeordnet ist.

3. Diffusionsabsorptionsanlage nach den Anspruch 1 oder 2,
**dadurch gekennzeichnet, dass** Absorber (2), Verdampfer (3) und Gas-/Gas-Wärmetauscher (4) in einem gemeinsamen, umgebenden Druckbehälter (1) angeordnet sind.

4. Diffusionsabsorptionsanlage nach einem der Ansprüche 1 bis 3,
**dadurch gekennzeichnet, dass** über dem Gas-/Gas-Wärmetauscher (4), auf dessen Abströmseite, ein Kanal (5) angeordnet ist, welcher das Zentrum des Verdampfers (3) durchdringt und in dessen oberen Bereich einmündet.

5. Diffusionsabsorptionsanlage nach einem der Ansprüche 1 bis 3,
**dadurch gekennzeichnet, dass** ein Ringspalt (6) zwischen der Innenseite des Absorbers (2) und der Außenseite des Gas-/Gas-Wärmetauschers (4) vorgesehen ist, welcher die obere Abströmseite des Absorbers (2) mit der unteren Einströmseite des Gas-/Gas-Wärmetauschers (4) verbindet.

6. Diffusionsabsorptionsanlage nach einem der Ansprüche 1 bis 5,
**dadurch gekennzeichnet, dass** die untere Abströmseite des Verdampfers (3) mit dem oberen Bereich des Gas-/Gas-Wärmetauschers (4) verbunden ist, so dass das den Verdampfer (3) verlassende Medium am Gas-/Gas-Wärmetauscher (4) im Gegenstrom zum aufsteigenden Medium im Zentrum der Anordnung strömt.

7. Diffusionsabsorptionsanlage nach einem der Ansprüche 1 bis 6,
**dadurch gekennzeichnet, dass** der Gas-/Gas-Wärmetauscher (4) als vertikal ausgerichteter Rohrbündel-Wärmetauscher ausgeführt ist.

8. Diffusionsabsorptionsanlage nach einem der Ansprüche 1 bis 7,
**dadurch gekennzeichnet, dass** innerhalb der Rohre des Rohrbündel-Wärmetauschers das aufsteigende Gas und außerhalb der Rohre das den Verdampfer (3) verlassende Medium strömt.

9. Diffusionsabsorptionsanlage nach einem der Ansprüche 1 bis 7,
**dadurch gekennzeichnet, dass** innerhalb der Rohre des Rohrbündel-Wärmetauschers das den Verdampfer (3) verlassende Medium und außerhalb der Rohre das aufsteigende Gas strömt.

## Claims

1. A diffusion absorption installation comprising a coolant or solvent circuit, a boiler, an absorber (2), a rectifier, a vaporiser (3), a gas/gas heat exchanger (4), a condenser and a reservoir for the coolant or solvent,
**characterised in that** said gas/gas heat exchanger (4) is arranged inside said absorber (2).

2. The diffusion absorption installation according to claim 1,
**characterised in that** the gas/gas heat exchanger (4) is arranged at the centre of the absorber (2), preferably underneath the vaporiser (3) and on its central axis.

3. The diffusion absorption installation according to claim 1 or claim 2,
**characterised in that** absorber (2), vaporiser (3) and gas/gas heat exchanger (4) are arranged in a common surrounding pressure vessel (1).

4. The diffusion absorption installation according to any one of claims 1 to 3,
**characterised in that** provided above the gas/gas heat exchanger (4) on its outflow side is a channel (5) which penetrates through the centre of the vaporiser (3) and opens into its upper region.

5. The diffusion absorption installation according to any one of claims 1 to 3,
**characterised in that** an annular gap (6) is provided between the inside of the absorber (2) and the outside of the gas/gas heat exchanger (4), which connects the upper outflow side of the absorber (2) to the lower inflow side of the gas/gas heat exchanger (4).

6. The diffusion absorption installation according to any one of claims 1 to 5,
**characterised in that** the lower outflow side of the vaporiser (3) is connected to the upper region of the gas/gas heat exchanger (4) so that the medium leaving the vaporiser (3) at the gas/gas heat exchanger (4) flows in the opposite direction to the ascending medium at the centre of the arrangement.

7. The diffusion absorption installation according to any one of claims 1 to 6,
**characterised in that** the gas/gas heat exchanger (4) is executed as a vertically aligned tube-bundle heat exchanger.

8. The diffusion absorption installation according to any one of claims 1 to 7,
**characterised in that** the ascending gas flows inside the tubes of the tube-bundle heat exchanger and the medium leaving the vaporiser (3) flows outside the tubes.

9. The diffusion absorption installation according to any one of claims 1 to 7,
**characterised in that** the medium leaving the vaporiser (3) flows inside the tubes of the tube-bundle heat exchanger and the ascending gas flows outside the tubes.

## Revendications

1. Installation de diffusion par absorption comportant un circuit de refroidisseur ou de solvant, un bouilleur, un absorbeur (2), un rectificateur, un vaporiseur (3), un échangeur de chaleur gaz/gaz (4), un condensateur ainsi qu'un réservoir pour le refroidisseur ou le solvant,
**caractérisée en ce que** l'échangeur de chaleur gaz/gaz (4) est disposé à l'intérieur de l'absorbeur (2).

2. Installation de diffusion par absorption selon la revendication 1,
**caractérisée en ce que** l'échangeur de chaleur gaz/gaz (4) est disposé au centre de l'absorbeur (2), de préférence en dessous du vaporiseur (3) et sur son axe médian.

3. Installation de diffusion par absorption selon la revendication 1 ou 2,
**caractérisée en ce que** l'absorbeur (2), le vaporiseur (3) et l'échangeur de chaleur gaz/gaz (4) sont disposés dans un réservoir à pression périphérique commun (1).

4. Installation de diffusion par absorption selon une des revendications 1 à 3,
**caractérisée en ce qu'**au dessus de l'échangeur de chaleur gaz/gaz (4), sur son côté évacuation, est disposé un canal (5) qui passe par le centre du vaporiseur (3) et débouche dans sa zone supérieure.

5. Installation de diffusion par absorption selon une des revendications 1 à 3,
**caractérisée en ce qu'**il est prévu, entre le côté intérieur de l'absorbeur (2) et le côté extérieur de l'échangeur de chaleur gaz/gaz (4), une fente annulaire (6) qui relie le côté évacuation supérieur de l'absorbeur (2) au côté afflux inférieur de l'échangeur de chaleur gaz/gaz (4).

6. Installation de diffusion par absorption selon une des revendications 1 à 5,
**caractérisée en ce que** le côté évacuation inférieur du vaporiseur (3) est relié à la zone supérieure de l'échangeur de chaleur gaz/gaz (4), de sorte que le fluide quittant le vaporiseur (3) par l'échangeur de chaleur gaz/gaz (4) s'écoule à contre-courant du fluide montant dans le centre de l'installation.

7. Installation de diffusion par absorption selon une des revendications 1 à 6,
**caractérisée en ce que** l'échangeur de chaleur gaz/gaz (4) est réalisé sous forme d'un échangeur de chaleur à faisceau de tuyaux orienté verticalement.

8. Installation de diffusion par absorption selon une des revendications 1 à 7,
**caractérisée en ce qu'**à l'intérieur des tuyaux de l'échangeur de chaleur à faisceau de tuyaux, s'écoule le gaz montant et qu'à l'extérieur des tuyaux s'écoule le fluide quittant le vaporiseur (3).

9. Installation de diffusion par absorption selon une des revendications 1 à 7,
**caractérisée en ce qu'**à l'intérieur des tuyaux de l'échangeur de chaleur à faisceau de tuyaux s'écoule le fluide quittant le vaporiseur (3) et qu'à l'extérieur des tuyaux s'écoule le gaz montant.
